Europäisches Patentamt

European Patent Office

Office européen des brevets

(11) Numéro de publication : **0 488 832 A1**

(12) # DEMANDE DE BREVET EUROPEEN

(21) Numéro de dépôt : **91402798.2**

(22) Date de dépôt : **21.10.91**

(51) Int. Cl.⁵ : **C04B 5/00,** C04B 7/147, C21B 3/06

(30) Priorité : **31.10.90 FR 9013555**

(43) Date de publication de la demande : **03.06.92 Bulletin 92/23**

(84) Etats contractants désignés : **AT BE CH DE DK ES FR GB GR IT LI LU NL SE**

(71) Demandeur : **SOLLAC**
**Immeuble Elysées La Défense, 29 Le Parvis**
**F-92800 PUTEAUX (FR)**

(72) Inventeur : **Schneider, Michel**
**144 avenue Kléber**
**F-59240 Dunkerque (FR)**
Inventeur : **Masson, Gérard**
**92 allée de Leeds, Les Opalines**
**F-59240 Dunkerque (FR)**

(74) Mandataire : **Lanceplaine, Jean-Claude et al**
**CABINET LAVOIX 2, Place d'Estienne d'Orves**
**F-75441 Paris Cédex 09 (FR)**

(54) **Procédé et installation de traitement des laitiers vitrifiés de hauts fourneaux et produits obtenus selon ce procédé.**

(57)     L'invention a pour objet un procédé de traitement de laitiers vitrifiés de hauts fourneaux, utilisables dans des techniques faisant appel aux prises hydrauliques, procédé dans lequel les laitiers vitrifiés bruts à l'état fondu sont solidifiés par trempe pour conférer auxdits laitiers des propriétés d'hydraulicité latente. Les laitiers vitrifiés sont constitués d'un mélange de fines et de particules de granulométrie dispersée.

    Le procédé consiste, à sécher ledit mélange, à séparer lesdites fines desdites particules de granulométrie dispersée, à séparer lesdites particules sous forme de granulés et sous forme de laitiers grossiers et à stocker les fines dans au moins un silo, tous les autres étant stockables en tas.

    L'invention a également pour objet une installation pour la mise en oeuvre du procédé.

EP 0 488 832 A1

La présente invention a pour objet un procédé et une installation de traitement des laitiers vitrifiés de hauts fourneaux, utilisables dans des techniques faisant appel aux prises hydrauliques notamment comme liant dans les graves, ciments, bétons et mortiers.

La présente invention a également pour objet les produits obtenus par ce procédé.

Les laitiers de hauts fourneaux sont des minéraux artificiels contenant les éléments résiduels de la fabrication de la fonte et provenant de la gangue accompagnant les oxydes de fer du minerai, les additions basiques et/ou acides et des cendres de combustible.

Les laitiers sont essentiellement constitués de quatre oxydes : $CaO$, $MgO$, $SiO_2$, $Al_2O_3$, mais aussi d'oxydes secondaires : $FeO$, $MnO$, $TiO_2$, $BaO$, $P_2O_5$, $Na_2O$, $K_2O$ et de sulfures : $FeS$, $MnS$ et $CaS$ en faibles proportions.

Les laitiers vitrifiés bruts de production se présentent sous la forme d'un sable ou d'un bouleté de granulométrie 0-5 à 0-8 mm avec moins de 2% de fines passant au tamis de 80 microns.

Ils servent, associés à un activant basique, de liants dans les graves laitiers et les sables laitiers utilisés pour la réalisation des assises de chaussées. Dans ces cas, ils jouent également le rôle de correcteur de granularité.

Une fois solidifiés rapidement par fragmentation et trempe, soit dans l'eau, soit dans l'eau et l'air, les laitiers se présentent sous la forme de granulés ou sous la forme de boulettes de structure chaotique, vitreuse, instable, et renfermant des énergies de cristallisation non dissipées. Leurs densités varient entre 0,5 et 1,3 et leurs teneurs en eau peuvent être comprises entre 8 et 25% et plus.

L'ensemble de ces caractéristiques physico-chimiques leur confèrent des propriétés d'hydraulicité latentes, d'où leur emploi principal comme liant dans les graves, les ciments, les bétons, les mortiers et plus généralement dans toutes les techniques faisant appel aux "prises hydrauliques".

Leur emploi seul ou avec d'autres liants, apporte des solutions techniques spécifiques recherchées dans certaines utilisations telles que :

– un durcissement retardé,
– une rhéologie améliorée,
– une résistance mécanique accrue,
– une résistance aux agents chimiques,
– et une résistance au gel et au dégel.

Leur réactivité hydraulique croît en relation étroite avec les finesses des moutures.

Plus ils sont utilisés fins, plus vite ils se dissolvent pour former des composés hydratés solides.

Plusieurs procédés de traitement des laitiers vitrifiés des hauts fourneaux sont connus.

Un procédé consiste à effectuer un prébroyage ce qui réduit la dispersion granulométrique et augmente le pourcentage des fines inférieur à 80 microns de l'ordre de 10% et plus. Cette modification physique permet de réduire dans les graves à la fois les consommations et les écarts sur les performances mécaniques des matériaux en place.

Toutefois, comme les laitiers vitrifiés bruts prennent naturellement en bloc deux à trois semaines après leur mise sur stock en tas, ce qui provoque des problèmes matériels pour leurs entrées dans les malaxeurs et des hétérogénéités dans des graves constituées, le prébroyage amplifie ce phénomène.

Les phénomènes de prise se produisent après quelques jours seulement étant donné l'abondance de fines.

Ce manque de stockabilité ne permet pas d'absorber les fluctuations saisonières des besoins et limite les utilisations à longue distance sur des gros chantiers routiers où les quantités nécessaires sont importantes et, ou les approvisionnements en laitiers ne peuvent être réalisés qu'après des stockages intermédiaires, et des transports de longue durée.

Un autre procédé connu, dénommé procédé "HERGOTT", consiste à laver dans un contre-courant d'eau, les laitiers vitrifiés bruts préalablement trempés et refroidis, afin d'éliminer une partie des sels calciques et les sulfates très solubles ainsi qu'une grande partie des fines qui facilitent la prise en masse.

Ce procédé permet d'améliorer la stockabilité des laitiers et de satisfaire les fournitures éloignées sans trop de risque de prise en masse.

Cette solution de lavage par dissolution des sels calciques, des sulfates et entrainement des fines naturelles jusqu'à 500 microns apporte un surcoût en réduisant l'hydraulicité du laitier comme liant.

Dans ce cas, ils sont utilisés avec des quantités supérieures d'activants rapportés et les performances finales sur les graves sont plus dispersées.

Un autre procédé connu consiste à sécher, puis à broyer les laitiers vitrifiés, seuls ou en même temps que d'autres produits dans des broyeurs à boulets pour augmenter leur réactivité hydraulique.

Dans ce cas, les laitiers vitrifiés bruts sont caractérisés par leurs compositions chimiques, leurs teneurs en eau et leurs broyabilités.

Sous cette forme c'est à dire inférieur à 60 microns, ils servent de constituant des ciments normalisés prêt à l'emploi pour la confection des bétons et mortiers utilisés dans les batiments, le Génie Civil, les ateliers de préfabrication de matériaux liés par prise hydraulique et en géotechnique routière.

Les préparations de ces ciments normalisés sont faites dans les ateliers de broyage des cimenteries.

Par ailleurs, les laitiers vitrifiés dans des proportions définies peuvent être mélangés intimement au broyage avec du clinker qui joue le rôle d'activant pendant l'hydratation. Des constituants secondaires sont ajoutés dans certains cas.

Par cette même technique, les cimentiers réalisent des liants hydrauliques spéciaux pour emploi exclusif en technique routière.

Pour ces produits les laitiers vitrifiés sont moulus à des finesses de 250 à 400 cm² par Kg environ. Ils sont mélangés dans des proportions de 85 à 95% avec des matières servant d'activant telles que des cendres volantes, la chaux ou le gypse.

Les consommations dans les graves de ces liants spéciaux sont de l'ordre de 4 à 5% de la masse des produits finis et de 3,5 à 4% avec les ciments normalisés. Les performances obtenues sur ces graves sont supérieures aux précédentes. Les problèmes d'approvisionnement et de stockage n'existent pas avec ces matériaux. Les chantiers sont équipés de silos et les transports se font par citernes.

Entre les utilisations des laitiers vitrifiés bruts et des laitiers vitrifiés prébroyés avec respectivement environ 2 et 12% de fines de granulométrie inférieure à 80 microns et les utilisations à moutures fines, les besoins dans la fabrication des graves sont dans le rapport moyen de 4 à 1 même de 5 à 1.

Pour le moment, il n'existe pas de produits adaptés pour combler cet intervalle.

Si le procédé "HERGOTT" rend stockable les laitiers vitrifiés en retirant les éléments fins très réactifs et les sels calciques qui sont des activants potentiels de l'hydraulicité, il est par contre onéreux et fait perdre une certaine capacité de prise qu'il faut compenser par une activation ultérieure.

De plus, il n'apporte aucune réduction sur les consommations dans les graves et, comme les laitiers vitrifiés traités contiennent toujours de l'eau, les risques d'hydratation localisée ne sont pas totalement exclus.

Les techniques cimentières de séchage broyage sont complexes, coûteuses et donnent des matériaux très fins à haute performance.

Elles ne permettent pas la réalisation de produits à des moutures plus grossières, mais précises.

D'autre part, tous les produits traités doivent être stockés en silo ce qui entraine une adaptation des investissements de la production avec le marché.

Le procédé selon l'invention permet d'éviter ces inconvénients et d'obtenir des produits de granulométrie précise ayant des réactivités hydrauliques adaptées aux divers emplois des laitiers vitrifiés comme matière première dans la fabrication des produits employés en Génie Civil et en bâtiment.

Le procédé suivant l'invention permet également de séparer les éléments sans modifier ni perdre les constituants en favorisant l'hydraulicité des laitiers vitrifiés.

La présente invention a pour objet un procédé de traitement des laitiers vitrifiés des hauts fourneaux, utilisables dans des techniques faisant appel aux prises hydrauliques notamment comme liant dans les graves, ciments, bétons et mortiers, procédé dans lequel les laitiers vitrifiés bruts à l'état fondu sont solidifiés par trempe pour conférer auxdits laitiers des propriétés d'hydraulicité latente, lesdits laitiers bruts étant constitués d'un mélange de fines et de particules de granulomérie dispersée, caractérisé en ce que :

– on sèche le mélange,

– on sépare lesdites fines desdites particules de granulométrie dispersée,

– on sépare lesdites particules, d'une part, sous forme de granulés et, d'autre part, sous forme de laitiers grossiers,

– on récupère lesdites fines,

– et on stocke les fines dans au moins un silo.

Selon d'autres caractéristiques de l'invention :

– on broie grossièrement le mélange avant séchage, pour augmenter la proportion de fines dans ledit mélange,

– on sépare lesdites fines en au moins deux granulométries pour obtenir des fines de faible granulométrie et des fines de très faible granulométrie, on stocke les fines de faible granulométrie dans au moins un silo et on stocke les fines de très faible granulométrie dans au moins un silo,

– le séchage dudit mélange est réalisé par fluidisation dans un courant d'air chaud,

– le courant d'air chaud est à une température comprise entre 160° et 650°C,

– le courant d'air chaud est récupéré du gaz de haut fourneau, d'acierie, de cokerie ou de tout autre fluide énergétique,

– on sépare lesdits granulés des laitiers vitrifiés grossiers par gravité,

– on sépare ledits granulés desdites fines par une séparation dynamique,

– on récupère lesdites fines par une séparation statique,

– on récupère lesdites très fines par filtration du courant d'air chaud,

– on stocke lesdits granulés et lesdits laitiers vitrifiés grossiers à l'air libre,

– on recycle les granulés en amont du broyage,

– on recyle les laitiers vitrifiés grossiers en amont du broyage,

– on reconstitue un mélange contenant une proportion déterminée de granulés et de laitiers vitrifiés grossiers et on recycle ledit mélange en amont du broyage,

– on reconstitue un mélange contenant une proportion déterminée de fines de faible et/ou de très faible granulométrie et de laitiers bruts,

– on reconstitue un mélange contenant une proportion déterminée de granulés et de fines de faible et/ou de très faible granulométrie,

– on reconstitue un mélange contenant une proportion déterminée de granulés, de fines de faible et/ou de très faible granulométrie et de laitiers vitrifiés grossiers,

– les granulés ont un diamètre moyen compris entre 700 microns et 3 mm en fonction des paramètres de réglage,

– lesdites fines de faible granulométrie ont un diamètre moyen compris entre 700 microns et 80 microns,

– lesdites fines de très faible granulométrie ont un diamètre moyen inférieur à 80 microns,

– les fines et les granulés contiennent moins de 1 % d'eau.

La présente invention a également pour objet une installation de traitement des laitiers vitrifiés de hauts fourneaux, utilisables dans des techniques faisant appel aux prises hydrauliques, notamment comme liant dans les graves, ciments, bétons et mortiers, lesdits laitiers vitrifiés ayant subi une trempe pour obtenir un mélange de fines et de particules de granulométrie dispersée, caractérisée en ce qu'elle comprend :

– des moyens de séchage du mélange,

– des moyens de séparation desdites fines et desdites particules de granulométrie dispersée,

– des moyens de séparation desdites particules, d'une part, sous forme de granulés et, d'autre part, sous forme de laitiers grossiers,

– et des moyens de stockage des fines.

Selon d'autres caractéristiques :

– l'installation comporte des moyens de broyage du mélange pour augmenter la proportion de fines dans ledit mélange,

– l'installation comporte également des moyens de séparation et de récupération desdites fines en au moins deux granulométries pour obtenir des fines de faible granulométrie et des fines de très faible granulométrie,

– les moyens de séchage dudit mélange sont constitués par une colonne sèche de fluidisation munie d'un générateur d'un courant d'air chaud régulable en température et en débit,

– les moyens de séchage dudit mélange sont constitués par un four horizontal,

– les moyens de séparation des fines et des granulés sont constitués par un séparateur dynamique disposé au sommet de ladite colonne sèche,

– les moyens de séparation des granulés et des laitiers vitrifiés grossiers sont constitués par ladite colonne sèche,

– les moyens de séparation et de récupération des fines sont constitués par au moins un séparateur statique et au moins un filtre à manche disposés en série avec lesdits moyens de séchage.

L'invention a encore pour objet les produits utilisables dans les techniques faisant appel aux prises hydrauliques, notamment comme liant dans les graves, ciments, bétons et mortiers, caractérisés en ce qu'ils sont obtenus par le procédé mentionné ci-dessus.

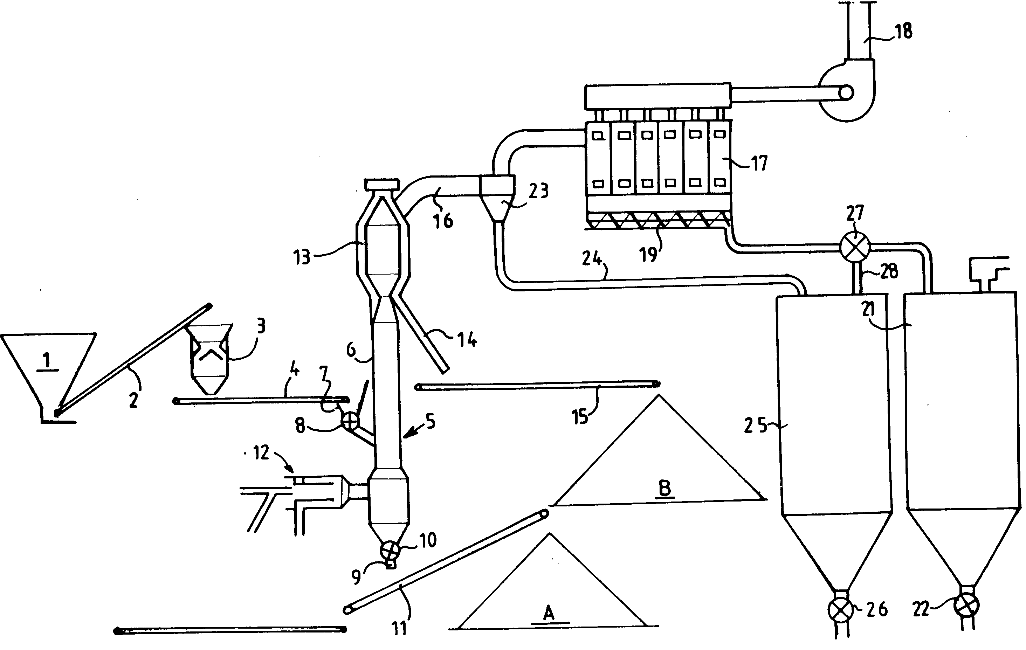

L'invention sera mieux comprise à la lecture de la description qui va suivre faite en se reportant à la figure unique annexée qui représente schématiquement une installation pour la mise en oeuvre du procédé selon l'invention.

Avant de subir le traitement dans l'installation représentée sur la figure, les laitiers à l'état fondu sont solidifiés par trempe pour former des laitiers vitrifiés bruts et conférer auxdits laitiers vitrifiés des propriétés d'hydraulicité latente.

L'installation comprend une trémie d'alimentation 1 dans laquelle sont déversés les laitiers vitrifiés bruts humides et/ou les laitiers vitrifiés secs recyclés comme on le verra ultérieurement.

Les laitiers vitrifiés bruts sont constitués d'un mélange de fines et de particules de granulométrie dispersée.

Cette trémie d'alimentation 1 est reliée par un tapis transporteur 2 à des moyens de broyage constitués par exemple par un broyeur à projection sous vide 3 ou un broyeur giratoire classique dans lequel les laitiers subissent un prébroyage.

Ce broyage n'est pas obligatoire et a uniquement pour but d'augmenter la proportion de fines dans ledit mélange.

Ensuite, le mélange ainsi obtenu est, soit transféré dans des moyens de séchage 5 par un tapis transporteur 4, soit recueilli et de nouveau réintroduit dans le broyeur 3 par la trémie 1 et le tapis transporteur 2 pour subir un nouveau broyage.

Ces moyens de séchage 5 sont constitués par exemple d'une colonne de séchage 6 par fluidisation du type "flash".

Cette colonne 6 comporte, d'une part, une goulotte d'alimentation 7 communiquant avec le tapis transporteur 4 et munie d'une vanne 8 et, d'autre part, à sa base un conduit d'évacuation 9 également muni d'une vanne 10. Le conduit d'évacuation 9 débouche au-dessus d'un tapis transporteur 11.

Par ailleurs, la colonne 6 comporte un générateur 12 d'un courant d'air chaud régulable en température et en débit. Le courant d'air chaud est à une température comprise entre 160° et 650°C et peut être récupéré des gaz du haut fourneau, d'acierie, de cokerie ou de tout autre fluide énergétique.

L'installation comporte également des moyens de séparation des fines et des granulés.

Les moyens de séparation des fines et des granulés sont formés par un séparateur dynamique, par exemple un cyclone 13 disposé au sommet de la colonne 6.

Le cyclone 13 est muni, d'une part, à sa partie inférieure d'un conduit 14 d'évacuation des granulés, débouchant au-dessus d'un tapis transporteur 15 et, d'autre part, à sa partie supérieure, d'un conduit 16 d'évacuation du courant d'air chaud contenant les fines de faible et de très faible granulométrie.

Sur le conduit 16 sont montés en série au moins un séparateur statique 23 et au moins un filtre à manche 17.

Ledit séparateur statique 23 permet de séparer les fines de faible granulométrie des fines de très faible granulométrie, tandis que ledit filtre à manche 17 permet de recueillir les fines de très faible granulométrie contenues dans le courant d'air chaud et de purifier le flux gazeux rejeté dans l'atmosphère.

Le mélange préalablement broyé, formé de fines et de laitiers grossiers est introduit dans la colonne 6 par la goulotte 7 et la vanne 8.

Le courant d'air chaud produit par le générateur 12 de la colonne 6 entraîne et sèche les fines, ce qui correspond à moins de 1 % de la masse des laitiers vitrifiés introduits dans ladite colonne.

Les granulés de granulométrie comprise entre 700 microns et 3mm en fonction des paramètres de réglage du cyclone 13, sont récupérés par gravité à la base dudit cyclone 13 et tombent par le conduit 14 sur le tapis transporteur 15, alors que les laitiers grossiers sont récupérés par le conduit 9 et la vanne 10 sur le tapis transporteur 11.

Les laitiers vitrifiés grossiers sont directement stockés à l'air libre sous la forme d'un tas A, ou réinjectés dans le circuit en amont du broyeur 3 pour subir un nouveau cycle de traitement, seuls ou mélangés aux laitiers vitrifiés bruts.

Les fines entraînées par le courant d'air chaud dans la colonne 6 sont séparées par déffilérisation en deux granulométries.

Les granulés, dont le diamètre moyen est compris entre 700 microns et 3 mm, recueuillis à la base du cyclone 13 et évacués par le conduit 14 et le tapis transporteur 15 sont stockés à l'air libre sous la forme d'un tas B.

Les fines de faible granulométrie et les fines de très faible granulométrie sont entraînées par le courant d'air chaud dans le conduit 16.

Les fines de faible granulométrie comprise entre 700 et 80 microns sont séparées par le séparateur statique 23 des fines de très faible granulométrie inférieure à 80 microns et transférées par un conduit 24 dans au moins un silo 25 muni à sa partie inférieure d'une vanne 26.

Les fines de très faible granulométrie inférieure à 80 microns sont captées pour le filtre à manche 17 et le flux gazeux est rejeté dans l'atmosphère par la cheminée 18.

Les fines de très faible granulométrie sont ainsi recueuillies à la base du filtre à manche 17 et transférées par exemple par un transporteur 19 et un conduit 20 dans au moins un silo 21 muni à sa partie inférieure d'une vanne 22.

Le conduit 20 est muni d'une vanne directionnelle 27 et d'un conduit de dérivation 28 pour recueillir les fines de très faible granulométrie dans le silo 25 pour que toutes les fines de granulométrie inférieure à 700 microns soient stockées dans le silo 25.

Selon un autre mode de réalisation, les moyens de séchage peuvent être constitués par un four horizontal.

Comme les laitiers vitrifiés grossiers, les granulés recueillis à la base du cyclone 13 peuvent être recyclés en amont du broyeur 3, seuls, regroupés avec lesdits laitiers grossiers et/ou mélangés avec des laitiers bruts.

Les produits obtenus, c'est à dire les laitiers grossiers de granulométrie supérieure à 3mm, les granulés compris entre 700 microns et 3 mm, les fines de faible granulométrie comprise entre 700 et 80 microns et les fines de très faible granulométrie inférieure à 80 microns, peuvent être utilisés seuls ou remélangés dans toutes les compositions granulométriques souhaitées.

Tous les produits ainsi réalisés, soit en atelier pour utilisation ultérieure, soit sur les chantiers lors de la confection des produits finis, par exemple centrale à bétons, à graves, ont des fuseaux granulométriques précis en fonction des activités hydrauliques "personnalisées". S'il y a nécessité de réaliser des stockages conjoncturels, la phase de prébroyage peut être bipassée et les seuils de fractionnement modifiés.

Le procédé selon l'invention réalise plusieurs types de produits : gros, moyens, fins, très fins et ce, dans des proportions adaptables pouvant aller jusqu'à 100% de fins du fait des possibilités de les recycler en amont de la phase de broyage. Les produits ainsi obtenus sont utilisables comme liant à haute valeur dans les techniques routières, cimentières et tous les emplois faisant appel à l'hydraulicité et deviennent stockables en vrac sans phénomène de prise comme cela est le cas sur le produit brut.

Le procédé selon l'invention est simple, peu coûteux en investissement et en fonctionnement, et permet de faire passer les laitiers à taux d'humidité variable et aux caractéristiques physiques et hydrauliques aléatoires en un ensemble de matériaux utilisables de manières qualitatives et quantitatives précises.

Il permet également une réduction de la consommation de laitiers vitrifiés et d'activants dans la fabrication des graves.

De plus, les produits peuvent être facilement broyés sur chantier et les installations ont un fonctionnement flexibles et modifiable à tout moment.

Les laitiers vitrifiés de faible granulométrie obtenus par le procédé selon l'invention ont des formes moins anguleuses que celles obtenues par broyage en technique cimentière.

De ce fait la rhéologie des bétons et ciments est améliorée lorsqu'ils sont employés.

Enfin, le fait que les produits obtenus par procédé selon l'invention soit sec permet un gain sur le coût de transport et une utilisation directe sans prétraitement chez le cimentier ou dans les centrales mobiles de fabrication de graves et autres matériaux complexes pour les routes.

## Revendications

1. Procédé de traitement des laitiers de hauts fourneaux, utilisables dans des techniques faisant appel aux prises hydrauliques notamment comme liant dans les graves, ciments, bétons et mortiers, procédé dans lequel les laitiers vitrifiés bruts à l'état fondu sont solidifiés par trempe pour conférer auxdits laitiers bruts des propriétés d'hydraulicité latente, lesdits laitiers bruts étant constitués d'un mélange de fines et de particules de granulométrie dispersée, caractérisé en ce que :
   – on sèche le mélange,
   – on sépare lesdites fines desdites particules de granulométrie dispersée,
   – on sépare lesdites particules, d'une part, sous forme de granulés et, d'autre part, sous forme de laitiers grossiers,
   – on récupère lesdites fines,
   – et on stocke les fines dans au moins un silo.

2. Procédé selon la revendication 1, caractérisé en ce qu'on broie grossièrement le mélange, avant le séchage, pour augmenter la proportion de fines dans ledit mélange.

3. Procédé selon la revendication 1, caractérisé en ce qu'on sépare lesdites fines en au moins deux granulométries pour obtenir des fines de faible granulométrie et des fines de très faible granulométrie, on stocke les fines de faible granulométrie dans au moins un silo et on stocke les fines de très faible granulométrie dans au moins un silo.

4. Procédé selon la revendication 1, caractérisé en ce que le séchage dudit mélange est réalisé par fluidisation sous un courant d'air chaud.

5. Procédé selon la revendication 3, caractérisé en ce que le courant d'air chaud est à une température comprise entre 160° et 650°C.

6. Procédé selon les revendications 4 et 5, caractérisé en ce que le courant d'air chaud est récupéré du gaz de haut fourneau, d'acierie, de cokerie ou de tout autre fluide énergétique.

7. Procédé selon la revendication 1, caractérisé en ce qu'on sépare lesdits granulés des laitiers vitrifiés grossiers par gravité.

8. Procédé selon la revendication 1, caractrisé en ce qu'on sépare lesdits granulés desdites fines par un séparateur dynamique.

9. Procédé selon la revendication 1, caractérisé en ce qu'on récupère lesdites fines par un séparateur statique.

10. Procédé selon l'une quelconque des revendications 1 à 6, caractérisé en ce qu'on récupère lesdites très fines par filtration du courant d'air chaud.

11. Procédé selon l'une quelconque des revendications précédentes, caractérisé en ce qu'on stocke lesdits granulés et lesdits laitiers vitrifiés grossiers à l'air libre.

12. Procédé selon l'une quelconque des revendications précédentes, caractérisé en ce qu'on recycle lesdits granulés en amont du broyage.

13. Procédé selon l'une quelconque des revendications précédentes, caractérisé en ce qu'on recycle lesdits laitiers vitrifiés grossiers en amont du broyage.

14. Procédé selon l'une quelconque des revendications précédentes, caractérisé en ce qu'on reconstitue un mélange contenant une proportion déterminée de granulés et de laitiers vitrifiés grossiers et on recycle ledit mélange en amont du broyage.

15. Procédé selon l'une quelconque des revendications précédentes, caractérisé en ce qu'on reconstitue un mélange contenant une proportion déterminée de fines de faible et/ou de très faible granulométrie et de laitiers vitrifiés bruts.

16. Procédé selon l'une quelconque des revendications précédentes, caractérisé en ce qu'on reconstitue un mélange contenant une proportion déterminée de granulés et de fines de faible et/de très faible granulométrie.

17. Procédé selon l'une quelconque des revendications précédentes, caractérisé en ce qu'on reconstitue un mélange contenant une proportion déterminée de granulés, de fines de faible et/ou de très faible granulométrie et de laitiers vitrifiés grossiers.

18. Procédé selon l'une quelconque des revendications précédentes, caractérisé en ce que lesdits granulés ont un diamètre moyen compris entre 700 microns et 3mm en fonction des paramètres de réglage.

19. Procédé selon l'une quelconque des revendications 1 à 16, caractérisé en ce que lesdites fines de faible granulométrie ont un diamètre moyen compris entre 700 microns et 80 microns.

**20.** Procédé selon l'une quelconque des revendications 1 à 17, caractérisé en ce que lesdites fines de très faible granulométrie ont un diamètre moyen inférieur à 80 microns.

**21.** Procédé selon la revendication 1, caractérisé en ce que, après séchage, les fines et les granulés contiennent moins de 1 % d'eau.

**22.** Installation de traitement de laitiers vitrifiés de hauts fourneaux, utilisables dans des techniques faisant appel aux prises hydrauliques, notamment comme liant dans les graves, ciments, bétons et mortiers, lesdits laitiers vitrifiés ayant subi une trempe pour obtenir un mélange de fines et de particules de granulométrie dispersée, caractérisée en ce qu'elle comprend :
   – des moyens (12) de séchage du mélange,
   – des moyens (13) de séparation desdites fines desdites particules de granulométrie dispersée,
   – des moyens (6) de séparation desdites particules, d'une part, sous forme de granulés et, d'autre part, sous forme de laitiers grossiers,
   – et des moyens ( 21, 25 ) de stokage des fines.

**23.** Installation selon la revendication 22, caractérisée en ce qu'elle comporte des moyens (3) de broyage du mélange pour augmenter la proportion de fines dans ledit mélange.

**24.** Installation selon la revendication 22, caractérisée en ce qu'elle comporte également des moyens (17, 19, 21, 23, 25) de séparation et de récupération desdites fines en au moins deux granulométries pour obtenir des fines de faible granulométrie et des fines de très faible granulométrie.

**25.** Installation selon la revendication 22, caractérisée en ce que les moyens de séchage dudit mélange sont constitués par une colonne sèche (6) de fluidisation munie d'un générateur (12) d'un courant d'air chaud régulable en température et en débit.

**26.** Installation selon la revendication 22, caractérisée en ce que les moyens de séchage dudit mélange sont constitués par un four horizontal.

**27.** Installation selon la revendication 22, caractérisée en ce que les moyens de séparation des fines et des granulés sont constitués par un séparateur dynamique (13) disposé au sommet de ladite colonne sèche (6).

**28.** Installation selon les revendications 22 et 25, caractérisée en ce que les moyens de séparation des granulés et des laitiers vitrifiés grossiers sont constitués par ladite colonne sèche (6).

**29.** Installation selon la revendication 24, caractérisé en ce que les moyens de séparation et de récupération des fines contenues dans le courant d'air chaud sont constitués par au moins un séparateur statique (23) et au moins un filtre à manche (17) disposés en série avec lesdits moyens de séchage.

**30.** Produits utilisables dans les techniques faisant appel aux prises hydrauliques notamment comme liant dans les graves, ciments, bétons et mortiers, caractérisés en ce qu'ils sont obtenus par le procédé selon l'une quelconque des revendications 1 à 21.

**Office européen
des brevets**

# RAPPORT DE RECHERCHE EUROPEENNE

Numero de la demande

EP 91 40 2798

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 632 711 (V. TRIEF)<br>* Le document en entier *<br>--- | 1,2,30 | C 04 B 5/00<br>C 04 B 7/147<br>C 21 B 3/06 |
| A | WO-A-8 909 751 (SOCIETE ANONYME V. HERGOTT)<br>* Page 5, ligne 16 - page 6, ligne 4; revendications *<br>--- | 1,2,30 | |
| A | FR-A-1 145 433 (RESOURCE USE LTD)<br>* Page 1, colonne de droite, alinéa 2 - page 2, colonne de droite, dernier alinéa *<br>--- | 1,2,4,<br>19,30 | |
| A | US-A-4 242 142 (K.H. GEE et al.)<br>* Colonne 5, ligne 19 - colonne 7, ligne 60 *<br>--- | 1,2,22,<br>23,30 | |
| A | STAHL UND EISEN, vol. 106, no. 23, 17 novembre 1986, pages 57-62, Dusseldorf, DE; H.W. GUDENAU et al.: "Schlackenabwärmenutzung"<br>* Page 58, colonne de droite, alinéa 2 - page 59, colonne de gauche, alinéa 1; figure 3 *<br>--- | | **DOMAINES TECHNIQUES RECHERCHES (Int. Cl.5)**<br><br>C 04 B<br>C 21 B |
| A | GB-A-2 061 251 (F. GAGNERAUD)<br>* Revendications *<br>--- | | |
| A | BE-A- 766 931 (M. PERNET et al.)<br>----- | | |

Le présent rapport a été établi pour toutes les revendications

| Lieu de la recherche | Date d'achèvement de la recherche | Examinateur |
|---|---|---|
| LA HAYE | 04-02-1992 | THEODORIDOU E. |